# EUROPEAN PATENT SPECIFICATION

(11) **EP 3 653 897 B1**
(45) Date of publication and mention of the grant of the patent: **20.07.2022**
(21) Application number: 18785492.2
(22) Date of filing: 21.09.2018
(51) Int. Cl.: F16D 13/22, F16D 13/56

(54) **CLUTCH FOR INCREASING TORQUE AND PREVENTING LOCKUP**
KUPPLUNG ZUR ERHÖHUNG DES DREHMOMENTS UND ZUR VERHINDERUNG DER ÜBERBRÜCKUNG
EMBRAYAGE DESTINÉ À AUGMENTER LE COUPLE ET À EMPÊCHER UN VERROUILLAGE

(43) Date of publication of application: 20.05.2020
(73) Proprietor: Hong Zheng Technology Corp., Kaohsiung, Taiwan 815 (TW)
(72) Inventor: CHEN, Chun-Chih, Kaohsiung, Taiwan 815 (CN); CHEN, Shuo-Yen, Kaohsiung, Taiwan 815 (CN); HUANG, Meng-Hsuan, Kaohsiung, Taiwan 815 (CN)
(74) Representative: Viering, Jentschura & Partner mbB Patent- und Rechtsanwälte
(86) International application number: PCT/CN2018/106860
(87) International publication number: WO 2020/056704

(56) References cited:
- WO-A1-2013/133364
- CN-A- 105 299 093
- CN-A- 105 805 295
- CN-A- 107 689 708
- CN-U- 205 401 486
- CN-Y- 201 045 381
- JP-B2- 4 566 797
- US-A1- 2007 221 465
- US-A1- 2008 296 118
- US-A1- 2014 353 108

## Description

### BACKGROUND OF THE INVENTION

### 1. Field of the Invention

This invention relates to a clutch field, particularly to a torque-enhancing clutch that prevents vehicle tire from being deadlocked in a moment.

### 2. Description of the Prior Art

A prior clutch, such as the Chinese Invention Publication No. CN102725553A (the same with JP2010-014917, PCT/JP2011/051488) "power transmission device", which is provided with a corresponding anti-torque limiting cam 12a and 14a on the cam assemblies 12 and 14 of the clutch assembly 4 respectively. As shown in Fig. 3b and 4b of CN102725553A, the torque stress is generated by the displacement "t" between the anti-torque limiting cam 12a and 14a to provides a torque buffer stress between the pressure assembly 5 and the clutch assembly 4.

However, the torque stress generated by t the anti-torque limiting cam 12a and 14a alone is not sufficient. In the process of vehicle shifting, insufficient torque stress will cause unstable shifting. In the process of high-speed downshifting, if the clutch can not reduce the speed difference between the engine and the tire, it is very easy to cause the problem of tire being deadlocked in a moment, which will cause the vehicle to slip easily. In addition, if the clutch cannot reduce the speed difference between the engine and the tire, the problem of sudden unintended accelerationis also likely to occur during the process of vehicle shift acceleration.

For this reason, the inventor of this invention, having much experience in designing and manufacturing clutch and its related products, understands and researches the problem of the foregoing clutch have insufficient torque stress and hence devised this invention.

US 2014/353108 A1, US 2007/221465 A1, and WO 2013/133364 A1 disclose clutch designs for use with vehicles.

### SUMMARY OF THE INVENTION

The objective of this invention is to offer a power torque clutch with avoided tire deadlock function, which is utilized various torque increasing structures to achieve the purpose of power-enhancing during acceleration and weight reduction of transmission lever, and the clutch is quieter operation and requiring less maintenance over the prior clutch. Moreover, this power torque clutch can reduce the speed difference between the output shaft and the engine, to make the shifting process stable and prevents vehicle tire from being deadlocked in a moment.

The power torque clutch with avoided tire deadlock function in the present invention includes at least a housing, a clutch assembly, a pressure plate, a tie rod, a support plate and an output shaft as main components combined together. Said housing is provided with a gear, a plurality of active clutch plates arranged in parallel are mounted on the inner side wall of the housing. Said clutch assembly is mounted inside said housing, a plurality of passive clutch plates arranged in parallel are mounted on the outer side wall of the clutch assembly, each of said passive clutch plates and each of said active clutch plates are alternately stacked with each other; said clutch assembly is coupled with one end of a output shaft, at least one first torsion flange is arranged above said clutch assembly, and said clutch assembly is provided with a plurality of nut columns. Said pressure plate is mounted above the clutch assembly, said pressure plate is provided with at least one first torsion groove, the shape of the first torsion groove is corresponded to the shape of the first torsion flange, at least one second torsion groove is arranged above said pressure plate; an annular surface is formed under the outer circumference of said pressure plate, the annular surface is in contact with the uppermost active clutch plate of the housing, and a friction surface is formed between the annular surface and the uppermost active clutch plate; at least one auxiliary steel plate is mounted on the outer side wall of the pressure plate, each of the auxiliary steel plate is inserted into the place between two active clutch plates; said pressure plate is provided with a plurality of spring grooves which are corresponding to said nut columns of the clutch assembly, a hollow annulation is provided under the spring groove. Said tie rod is mounted in said pressure plate, and the tie rod can drive the pressure plate to move up and down. Said support plate is mounted above the pressure plate, said support plate is provided with a plurality of bolt holes which are corresponding to the nut columns of the clutch assembly; said compression spring is mounted outside the nut columns and between the support plate and the annulation of the pressure plate to provide a rebounding force for the pressure plate; said support plate is provided with at least one second torsion flange, the shape of the second torsion flange is corresponded to the shape of the second torsion groove of the pressure plate.

The power torque clutch with avoided tire deadlock function invention, among which said first and second torsion flange are individually provided with an oblique surface and an upright surface, and an acute angle is formed at the end of the first and second torsion flange; said first and second torsion groove are individually provided with an oblique surface and an upright surface, an recess is formed at the end of the first and second torsion groove.

The power torque clutch with avoided tire deadlock function invention, among which said second torsion groove can be symmetrically disposed above said first torsion groove, so that the space of the pressure plate can be fully utilized, and the pressure applied to the pressure plate can be more evenly distributed. Said clutch assembly may be provided with three first torsion flanges, the first torsion flanges are arranged at an interval of 120 degrees from each other to improve the torsional stability between the clutch assembly and the pressure plate.

The power torque clutch with avoided tire deadlock function invention, among which when the vehicle is to be shifted, the driver or the electronic control unit will activate said tie rod to driven said pressure plate to generate an upward pulling force. At this time, the second torsion groove of the pressure plate will generate a corresponding rotational torque with the second torsion flange of the support plate to buffer the upward pulling force of the pressure plate, so that the speed of the pressure plate to release the active clutch plates can be slowed down, and the transmission can be stably shifted. When the driver or the electronic control unit completes the shifting, at the moment of closing the clutch, a rebounding force generated by the compression spring will cause the pressure plate to generate a downward pressure. At this time, the first torsion groove of the pressure plate will generate a corresponding rotational torque with the first torsion flange of the clutch assembly to buffer the downward pressure of the pressure plate. In this way, the danger of slipping or falling causes by the active clutch plates and the passive clutch plates are instantaneously deadlock can be avoided.

The power torque clutch with avoided tire deadlock function invention, among which the friction surface generated between the annular surface and the active clutch plate and the auxiliary steel sheet and the active clutch plates will continuously provide frictional resistance. In this way, the active clutch plates of housing can continuously generate a stable torque output to the clutch assembly and reduce the speed difference between the output shaft and the engine, to make the shifting process stable and prevents vehicle tire from being deadlocked in a moment.

### BRIEF DESCRIPTION OF DRAWINGS

This invention will be better understood by referring to the accompanying drawings, wherein:
Fig. 1 is a top side view in the present invention;
Fig. 2 is a sectional view in the present invention, and show the action of the pressure plate moving upward;
Fig. 3 is an sectional view of A-A shown in Fig. 1, and show the action of the pressure plate moving upward;
Fig. 4 is a partial enlarged view of the I area in Fig. 3, and show the action of the pressure plate moving upward.
Fig. 5 is a sectional view in the present invention, and show the action of the pressure plate moving downward;
Fig. 6 is an sectional view of A-A shown in Fig. 1, and show the action of the pressure plate moving downward;
Fig. 7 is a partial enlarged view of the II area in Fig. 6, and show the action of the pressure plate moving downward.
Fig. 8 is a top side view of clutch assembly in the present invention;
Fig. 9 is an sectional view of B-B shown in Fig. 8;
Fig. 10 is a top side view of pressure plate in the present invention;
Fig. 11 is an sectional view of C-C shown in Fig. 10;
Fig. 12 is an sectional view of D-D shown in Fig. 10;
Fig. 13 is a partial installation operation view in the present invention;
Fig. 14 is a top side view of support plate in the present invention;
Fig. 15 is an sectional view of E-E shown in Fig. 14;
Fig. 16 is an sectional view of F-F shown in Fig. 14;
Fig. 17 is an installation operation view of a tie rod and a support plate in the present invention; and
Fig. 18 is a three-dimensional view in the present invention.

### DETAILED DESCRIPTION OF THE PREFERRED EMBODIMENT

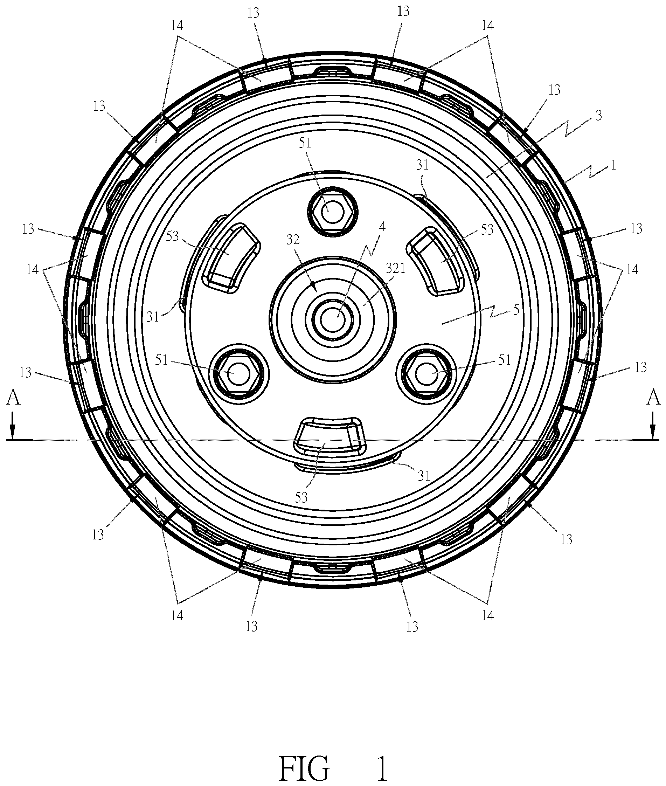

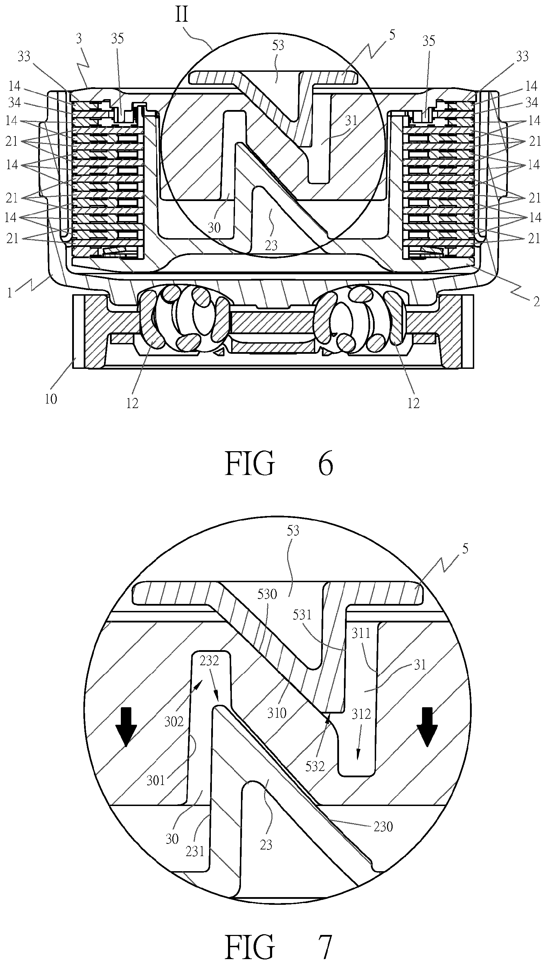

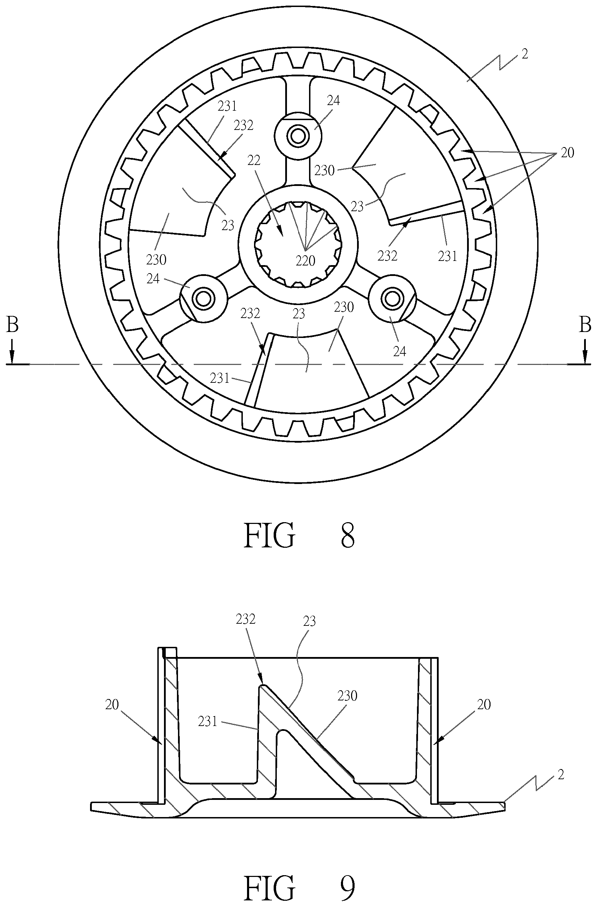

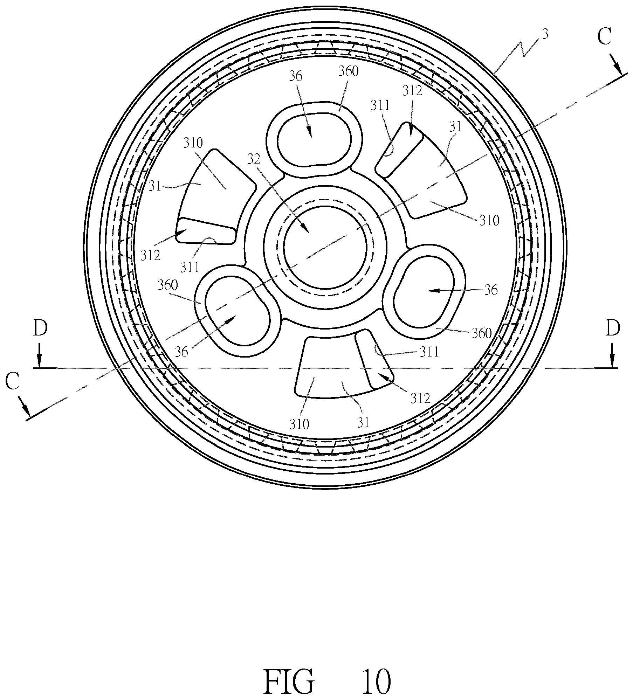

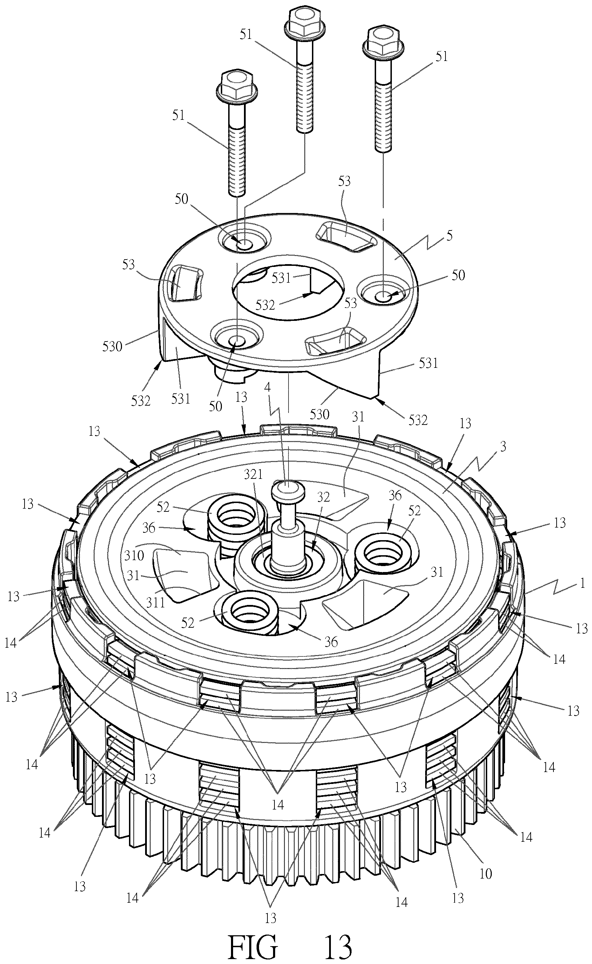

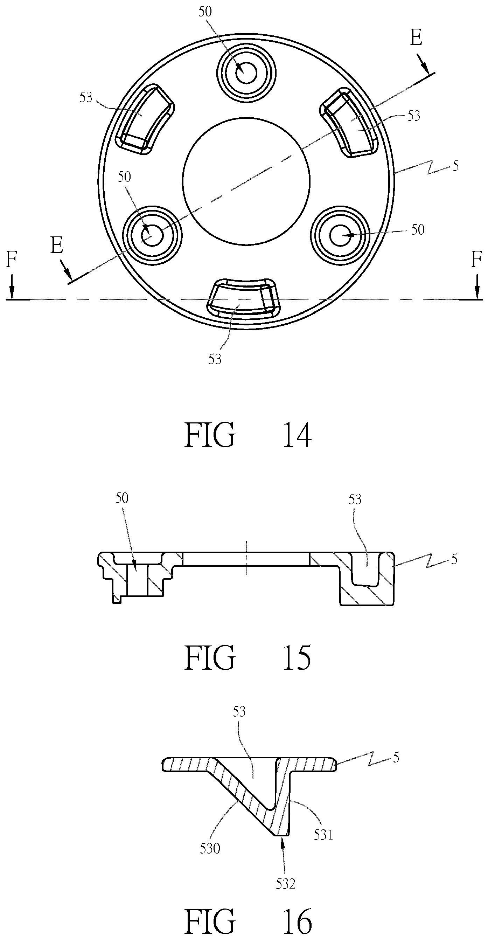

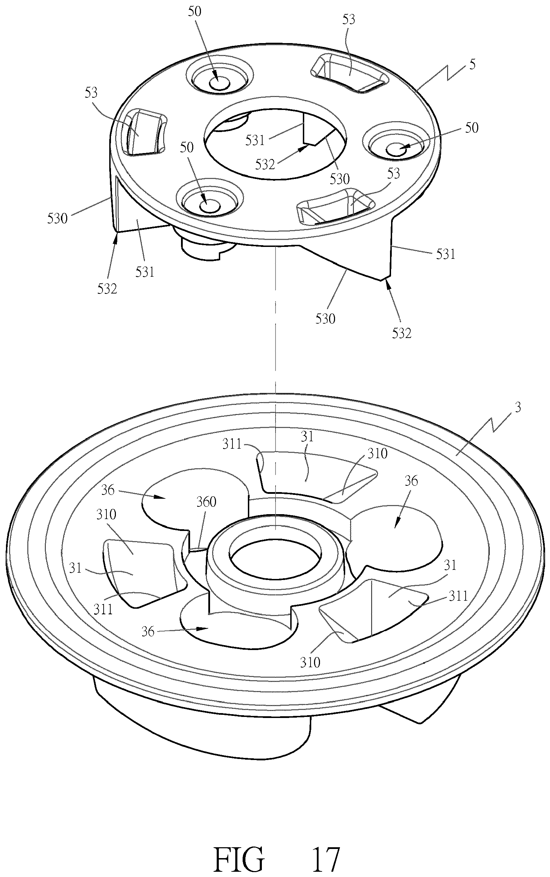

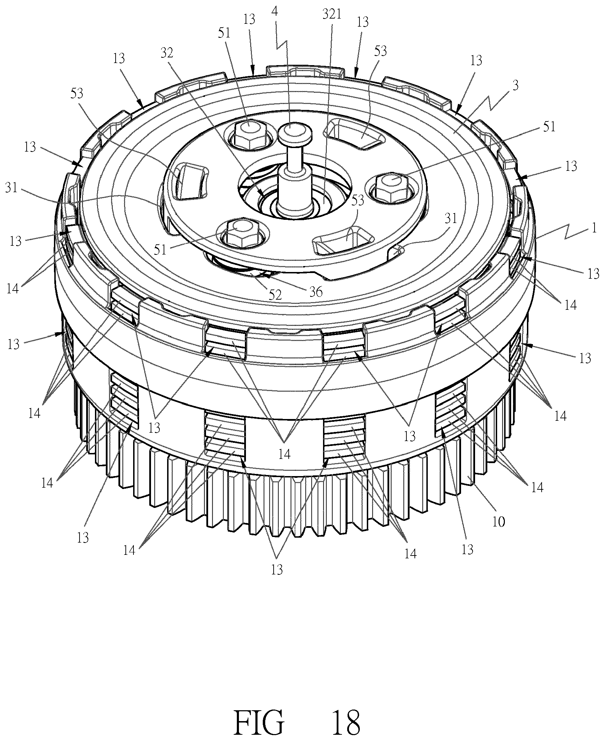

A preferred embodiment of the power torque clutch with avoided tire deadlock function in the present invention, as shown in Figs. 1 to 18, includes at least a housing 1, a clutch assembly 2, a pressure plate 3, a tie rod 4, a support plate 5 and an output shaft 6 as main components combined together.

As shown in Figs. 1 to 4, a gear 10 is mounted under said housing 1, and the housing 1 and the gear 10 are riveted with each other by a connecting member 11. Said gear 10 is connected with a primary drive gear of the vehicle engine to obtain the power to drive the housing 1 to rotate. A plurality of buffer springs 12 are arranged between the housing 1 and the gear 10, so that the power of the engine can be stably outputted to the housing 1 and the noise generated between the gear 10 and the primary drive gear can be eliminated. The inner side wall of the housing 1 is provided with a plurality of first mounting slots 13, and a plurality of active clutch plates 14 arranged in parallel are mounted therein, so that the active clutch plates 14 can be fixed to the inside of the housing 1, and rotate synchronously with the housing 1.

As shown in Figs. 1 to 4, 8 and 9, said clutch assembly 2 is mounted inside said housing 1. The outer side wall of the clutch assembly 2 is provided with a plurality of second mounting slots 20, and a plurality of passive clutch plates 21 arranged in parallel are provided therein, so that the passive clutch plates 21 can be fixed on the outside of the clutch assembly 2 and rotate synchronously with the clutch assembly 2, and each of the passive clutch plates 21 and each of the active clutch plates 14 are alternately stacked with each other. The center of said clutch assembly 2 is provided with a through hole 22, and a spline groove 220 is formed inside the through hole 22. The spline groove 220 is coupled with one end of said output shaft 6 and the other end of the output shaft 6 is connected to the transmission. In this way, when the clutch assembly 2 rotates, the output shaft 6 and the transmission can be rotated synchronously.

At least one first torsion flange 23 is arranged above said clutch assembly 2, the first torsion flange 23 is provided with an oblique surface 230 and an upright surface 231, and an acute angle 232 is formed at the top end of the first torsion flange 23. When the clutch assembly 2 is provided with three first torsion flanges 23, the first torsion flanges 23 are arranged at an interval of 120 degrees from each other to improve the torsional stability between the clutch assembly 2 and the pressure plate 3. Said clutch assembly 2 is provided with a plurality of nut columns 24.

As shown in Figs. 1 to 4 and 10 to 12, said pressure plate 3 is mounted above the clutch assembly 2. Said pressure plate 3 is provided with at least one first torsion groove 30, the shape of the first torsion groove 30 is corresponded to the shape of the first torsion flange 23, and the first torsion groove 30 is provided with an oblique surface 300 and an upright surface 301, an recess 302 is formed at the top end of the first torsion groove 30, so that a torque stress between the pressure plate 3 and the clutch assembly 2 can be generated to buffer the pressure between the pressure plate 3 and the clutch assembly 2. Therefore, when the pressure plate 3 and the clutch assembly 2 are pressed against each other, a torque stress will be generated to buffer the pressure between the pressure plate 3 and the clutch assembly 2, and the clutch assembly 2 can stably output the rotational power.

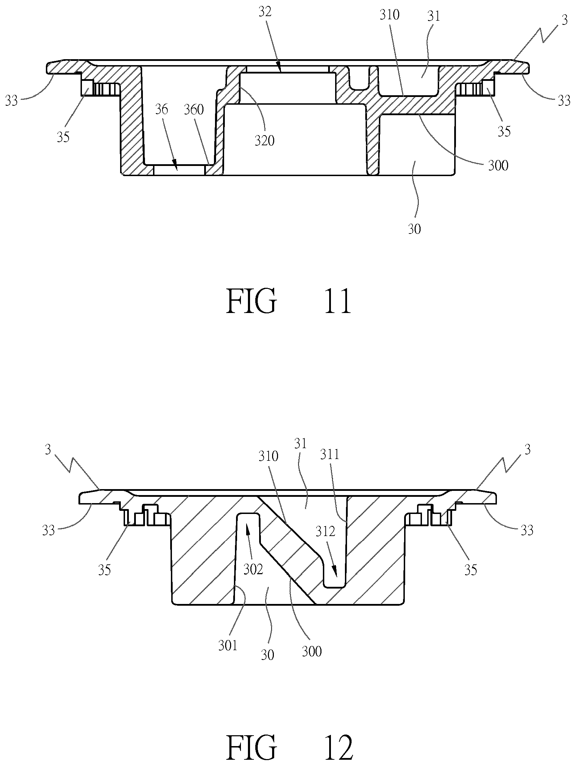

At least one second torsion groove 31 is arranged above said pressure plate 3, the second torsion groove 31 is provided with an oblique surface 310 and an upright surface 311, an recess 312 is formed at the bottom end of the second torsion groove 31. As shown in Fig. 12, said second torsion groove 31 can be symmetrically disposed above said first torsion groove 30, so that the space of the pressure plate 3 can be fully utilized, and the pressure applied to the pressure plate 3 can be more evenly distributed. The center of said pressure plate 3 is provided with a through hole 32, a bearing groove 320 is formed in the through hole 32, a ball bearing 321 is mounted in the bearing groove 320, and said tie rod 4 is mounted in the ball bearing 321.

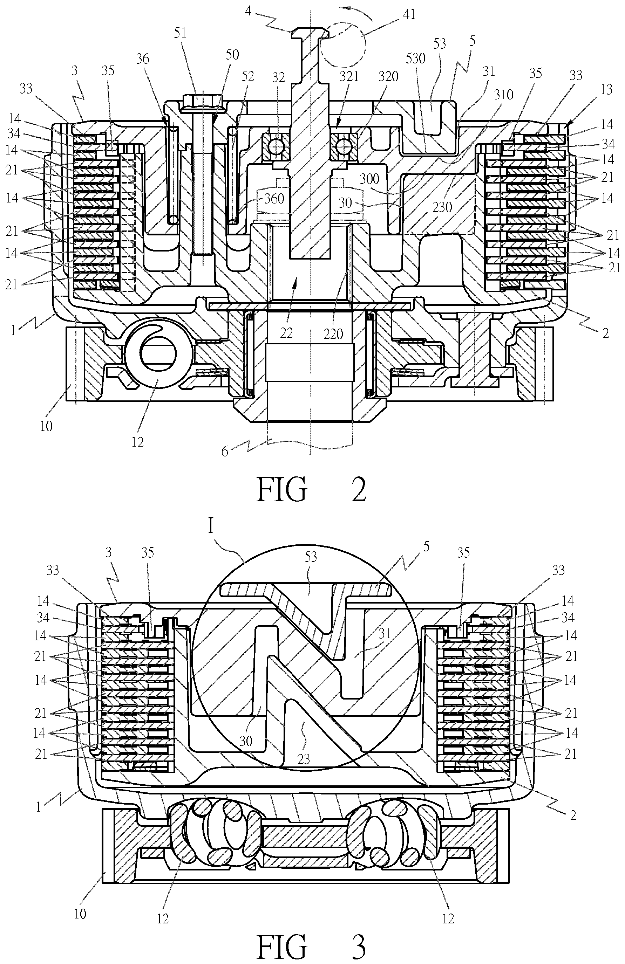

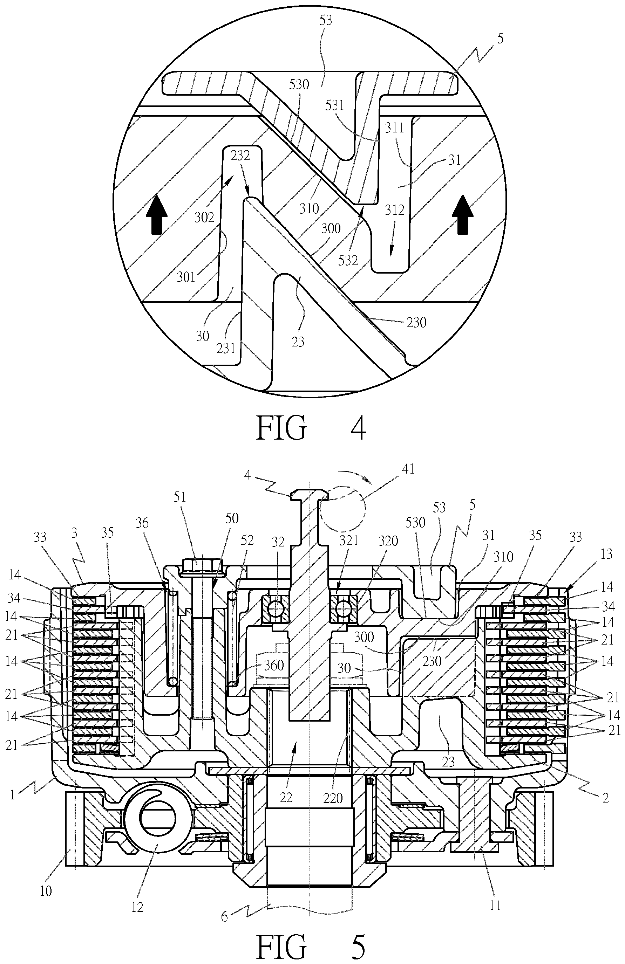

An annular surface 33 is formed under the outer circumference of said pressure plate 3, the annular surface 33 is in contact with the uppermost active clutch plate 14 of the housing, and a friction surface is formed between the annular surface 33 and the uppermost active clutch plate 14. A lower circumference 35 is formed below said annular surface 33, at least one auxiliary steel plate 34 is mounted on the lower circumference 35, each of the auxiliary steel plate 34 is inserted into the place between two active clutch plates 14, so that each of the auxiliary steel sheets 34 can generate two friction surfaces with said active clutch plate 14 (as shown in Figs. 2 and 5) to increase the torque stress output between the pressure plate 3 and housing 1. Said pressure plate 3 is provided with a plurality of spring grooves 36 which are corresponding to said nut columns 24 of the clutch assembly 2, a hollow annulation 360 is provided under the spring groove 36, so that a compression spring 52 can be mounted in the spring groove 36 and the nut columns 24 can pass through the spring slot 36.

As shown in Figs. 1, 2, 5, 13 and 18, said tie rod 4 is mounted in the ball bearing 321 of the pressure plate 3, a transmission lever 41 is provided above the tie rod 4, and the transmission lever 41 can drive the tie rod 4 to move up and down, then the tie rod 4 can drive the pressure plate 3 to move up and down.

As shown in Figs. 1 to 4 and 13 to 17, said support plate 5 is mounted above the pressure plate 3, said support plate 5 is provided with a plurality of bolt holes 50 which are corresponding to the nut columns 24 of the clutch assembly 2, so that the bolts 51 can pass through the bolt holes 50 and lock the nut columns 24 of clutch assembly 2. said compression spring 52 is mounted outside the nut columns 24 and between the support plate 5 and the annulation 360 of the pressure plate 3 to provide a rebounding force for the pressure plate 3. Said support plate 5 is provided with at least one second torsion flange 53, the second torsion flange 53 is provided with an oblique surface 530 and an upright surface 531, and an acute angle 532 is formed at the bottom end of the second torsion flange 53. The shape of the second torsion flange 53 is corresponded to the shape of the second torsion groove 31 of the pressure plate 3 (as shown in Figs. 2 and 5), so that a torque stress between the pressure plate 3 and the support plate 5 can be generated to buffer the pressure between the pressure plate 3 and the support plate 5.

As shown in Figs. 2 to 4, when the vehicle is to be shifted, the driver or the electronic control unit will activate the transmission lever 41 to rotate counterclockwise, then said tie rod 4 drives said pressure plate 3 to generate an upward pulling force. At this time, the second torsion groove 31 of the pressure plate 3 will generate a corresponding rotational torque with the second torsion flange 53 of the support plate 5 to buffer the upward pulling force of the pressure plate 3, so that the speed of the pressure plate 3 to release the active clutch plates 14 can be slowed down, and the transmission can be stably shifted.

As shown in Figs. 5 to 7, when the driver or the electronic control unit completes the shifting, at the moment of closing the clutch, the transmission lever 41 will rotate clockwise, and a rebounding force generated by the compression spring 52 will cause the pressure plate 3 to generate a downward pressure. At this time, the first torsion groove 30 of the pressure plate 3 will generate a corresponding rotational torque with the first torsion flange 23 of the clutch assembly 2 to buffer the downward pressure of the pressure plate 3. In this way, the danger of slipping or falling causes by the active clutch plates 14 and the passive clutch plates 21 are instantaneously deadlock (clamped) can be avoided (in the case of a high speed downshift, since the rotational speed of the output shaft 6 is greater than the engine idling speed, after shifting, if the driver does not immediately increase the engine speed, the speed difference between the output shaft 6 and the engine will cause the output shaft 6 to momentarily stop, which will cause the tire to slip).

It is worth mentioning that in the process of shifting in Figures 2~7, the friction surface generated between the annular surface 33 and the active clutch plate 14 and the auxiliary steel sheet 34 and the active clutch plates 14 will continuously provide frictional resistance. In this way, the active clutch plates 14 of housing 1 can continuously generate a stable torque output to the clutch assembly 2 and reduce the speed difference between the output shaft 6 and the engine, to make the shifting process stable and prevents vehicle tire from being deadlocked in a moment. In addition, the power torque clutch of the present invention utilizes various torque increasing structures to achieve the purpose of power-enhancing during acceleration and weight reduction of transmission lever 41, and the clutch is quieter operation and requiring less maintenance over the prior clutch. Evidently this invention has tangible benefits and tallies with progressiveness and novelty demanded by patent laws.

## Claims

1. A power torque clutch with avoided tire deadlock function comprising:
a housing (1), is provided with a gear (10), the housing (1) and the gear (10) are riveted with each other by a connecting member (11); a plurality of active clutch plates (14) arranged in parallel are mounted on the inner side wall of the housing (1), so that the active clutch plates (14) can be fixed to the inside of the housing (1) and rotate synchronously with the housing (1);
a clutch assembly (2), is mounted inside said housing (1), a plurality of passive clutch plates (21) arranged in parallel are mounted on the outer side wall of the clutch assembly (2), so that the passive clutch plates (21) can be fixed on the outside of the clutch assembly (2) and rotate synchronously with the clutch assembly (2); each of said passive clutch plates (21) and each of said active clutch plates (14) are alternately stacked with each other; said clutch assembly (2) is coupled with one end of a output shaft (6); at least one first torsion flange (23) is arranged above said clutch assembly (2); said clutch assembly (2) is provided with a plurality of nut columns (24);
a pressure plate (3), is mounted above the clutch assembly (2), said pressure plate (3) is provided with at least one first torsion groove (30), the shape of the first torsion groove (30) is corresponded to the shape of the first torsion flange (23), so that a torque stress between the pressure plate (3) and the clutch assembly (2) can be generated to buffer the pressure between the pressure plate (3) and the clutch assembly (2); an annular surface (33) is formed under the outer circumference of said pressure plate (3), the annular surface (33) is in contact with the uppermost active clutch plate (14) of the housing (1), and a friction surface is formed between the annular surface (33) and the uppermost active clutch plate (14); at least one auxiliary steel plate (34) is mounted on the outer side wall of the pressure plate (3), each of the auxiliary steel plate (34) is inserted into the place between two active clutch plates (14), so that each of the auxiliary steel sheets (34) can generate two friction surfaces with said active clutch plate (14) to increase the torque stress output between the pressure plate (3) and housing (1); said pressure plate (3) is provided with a plurality of spring grooves (36) which are corresponding to said nut columns (24) of the clutch assembly (2), a hollow annulation (360) is provided under the spring groove (36), so that a compression spring (52) can be mounted in the spring groove (36) and the nut columns (24) can pass through the spring slot;
a tie rod (4), is mounted in said pressure plate (3), and the tie rod (4) can drive the pressure plate (3) to move up and down; and
a support plate (5), is mounted above the pressure plate (3), said support plate (5) is provided with a plurality of bolt holes (50) which are corresponding to the nut columns (24) of the clutch assembly (2), so that the bolts (51) can pass through the bolt holes (50) and lock the nut columns (24) of clutch assembly (2); said compression spring (52) is mounted outside the nut columns (24) and between the support plate (5) and the annulation of the pressure plate (3) to provide a rebounding force for the pressure plate (3);
**characterized in that**
at least one second torsion groove (31) is arranged above said pressure plate (3);
said support plate (5) is provided with at least one second torsion flange (53), the shape of the second torsion flange (53) is corresponded to the shape of the second torsion groove (31) of the pressure plate (3), so that a torque stress between the pressure plate (3) and the support plate (5) can be generated to buffer the pressure between the pressure plate (3) and the support plate (5);
in this way, when the vehicle is to be shifted, the driver or the electronic control unit will activate the transmission lever (41) to rotate counterclockwise, then said tie rod (4) drives said pressure plate (3) to generate an upward pulling force; at this time, the second torsion groove (31) of the pressure plate (3) will generate a corresponding rotational torque with the second torsion flange (53) of the support plate (5) to buffer the upward pulling force of the pressure plate (3), so that the speed of the pressure plate (3) to release the active clutch plates (14) can be slowed down, and the transmission can be stably shifted;
when the driver or the electronic control unit completes the shifting, at the moment of closing the clutch, the transmission lever (41) will rotate clockwise, and a rebounding force generated by the compression spring (52) will cause the pressure plate (3) to generate a downward pressure; at this time, the first torsion groove (30) of the pressure plate (3) will generate a corresponding rotational torque with the first torsion flange (23) of the clutch assembly (2) to buffer the downward pressure of the pressure plate (3); so that the danger of slipping or falling causes by the active clutch plates (14) and the passive clutch plates (21) are instantaneously deadlock can be avoided.

2. The power torque clutch with avoided tire deadlock function according to claim 1, wherein only one auxiliary steel plate (34) is mounted on the outer side wall of the pressure plate (3), the auxiliary steel plate (34) is inserted into the place between two active clutch plates (14), so that the auxiliary steel sheets (34) can generate two friction surfaces with said active clutch plate (14) to increase the torque stress output between the pressure plate (3) and housing (1).

3. The power torque clutch with avoided tire deadlock function according to claim 1, wherein the center of said clutch assembly (2) is provided with a through hole (22), and a spline groove (220) is formed inside the through hole (22), the spline groove (220) is coupled with one end of said output shaft (6) and the other end of the output shaft (6) is connected to the transmission.

4. The power torque clutch with avoided tire deadlock function according to claim 1, wherein said first torsion flange (23) is provided with an oblique surface (230) and an upright surface (231), and an acute angle (232) is formed at the top end of the first torsion flange (23); said second torsion groove (31) is symmetrically disposed above said first torsion groove (30).

5. The power torque clutch with avoided tire deadlock function according to claim 4, wherein said clutch assembly (2) is provided with three first torsion flanges (23), the first torsion flanges (23) are arranged at an interval of 120 degrees from each other to improve the torsional stability between the clutch assembly (2) and the pressure plate (3).

6. The power torque clutch with avoided tire deadlock function according to claim 1, wherein said first torsion groove (30) is provided with an oblique surface (300) and an upright surface (301), an recess is formed at the end of the first (30) and second torsion groove (31); said second torsion groove (31) is provided with an oblique surface (310) and an upright surface (311), an recess (302, 312) is formed at the end of the first (30) and second torsion groove (31).

7. The power torque clutch with avoided tire deadlock function according to claim 1, wherein at least three friction surfaces are generated between the annular surface (33) and the active clutch plate (14) and the auxiliary steel sheet (34) and the active clutch plates (14), the friction surfaces will continuously provide frictional resistance so that the active clutch plates (14) of housing (1) can continuously generate a stable torque output to the clutch assembly (2).

8. The power torque clutch with avoided tire deadlock function according to claim 1, wherein each compression spring (52) is mounted in each spring grooves (36) of said pressure plate (3), the compression spring (52) is against the hollow annulation (360) of the spring grooves (36), and the compression spring (52) assists the pressure plate (3) in quickly returning to its original position.

9. The power torque clutch with avoided tire deadlock function according to claim 1, wherein said tie rod (4) is pivoted on said pressure plate (3), the center of said pressure plate (3) is provided with a through hole (32), a bearing groove (320) is formed in the through hole (32), a ball bearing (321) is mounted in the bearing groove (320), and said tie rod (4) is mounted in the ball bearing (321); in this way, the tie rod (4) can drive the pressure plate (3) to move up to make the transmission stable shifting, and the transmission lever (41) can drive the tie rod (4) to move down to prevent vehicle tire from being deadlocked in a moment.

10. The power torque clutch with avoided tire deadlock function according to claim 1, wherein said second torsion flange (53) is provided with an oblique surface (530) and an upright surface (531), and an acute angle (532) is formed at the bottom end of the second torsion flange (53).

## Patentansprüche

1. Eine Leistungsdrehmoment-Kupplung mit Verhinderung-Reifen-Blockier-Funktion, welche aufweist:
ein Gehäuse (1), welches mit einem Zahnrad (10) vorgesehen ist, wobei das Gehäuse (1) und das Zahnrad (10) miteinander durch ein Verbindungselement (11) vernietet sind, wobei eine Mehrzahl an aktiven Kupplungsplatten (14), welche parallel angeordnet sind, an der inneren Seitenwand des Gehäuses (1) montiert sind, sodass die aktiven Kupplungsplatten (14) am Inneren des Gehäuses (1) fixiert und sich synchron mit dem Gehäuse (1) drehen können;
eine Kupplungsvorrichtung (2), welche im Inneren des besagten Gehäuses (1) montiert ist, wobei eine Mehrzahl an passiven Kupplungsplatten (21), welche parallel angeordnet sind, an der äußeren Seitenwand der Kupplungsvorrichtung (2) montiert sind, sodass die passiven Kupplungsplatten (21) am Äußeren der Kupplungsvorrichtung (2) befestigt sein und sich synchron mit der Kupplungsvorrichtung (2) drehen können; wobei jede von besagten passiven Kupplungsplatten (21) und jede von besagten aktiven Kupplungsplatten (14) alternierend miteinander gestapelt sind; wobei besagte Kupplungsvorrichtung (2) mit einem Ende einer Ausgabewelle (6) gekoppelt ist; wobei zumindest ein erster Torsionsflansch (23) über besagter Kupplungsvorrichtung (2) angeordnet ist; wobei besagte Kupplungsvorrichtung (2) mit einer Mehrzahl von Gewindebuchsen (24) vorgesehen ist;
eine Druckplatte (3), welche über der Kupplungsvorrichtung (2) montiert ist, wobei besagte Druckplatte (3) mit zumindest einer ersten Torsionsnut (30) vorgesehen ist, wobei die Form der ersten Torsionsnut (30) mit der Form des ersten Torsionsflanschs (23) korrespondiert, sodass eine Torsionsspannung zwischen der Druckplatte (3) und der Kupplungsvorrichtung (2) erzeugt werden kann, um den Druck zwischen der Druckplatte (3) und der Kupplungsvorrichtung (2) zu puffern; wobei eine ringförmige Fläche (33) unter dem äußeren Umfang von besagter Druckplatte (3) gebildet ist,
wobei die ringförmige Fläche (33) in Kontakt mit der obersten aktiven Kupplungsplatte (14) des Gehäuses (1) ist, und wobei eine Reibfläche zwischen der ringförmigen Fläche (33) und der obersten aktiven Kupplungsplatte (14) gebildet ist;
wobei zumindest eine Hilf-Stahl-Platte (34) an der äußeren Seitenwand der Druckplatte (3) montiert ist, wobei jede der Hilf-Stahl-Platten (34) in den Platz zwischen zwei aktiven Kupplungsplatten (14) eingesetzt ist, sodass jedes der Hilf-Stahl-Bleche (34) zwei Reibflächen mit besagter aktiven Kupplungsplatte (14) erzeugen kann, um die Torsionsspannung-Ausgabe zwischen der Druckplatte (3) und dem Gehäuse (1) zu erhöhen; wobei besagte Druckplatte (3) mit einer Mehrzahl an Federnuten (36) vorgesehen ist, welche mit besagten Gewindebuchsen (24) der Kupplungsvorrichtung (2) korrespondieren, wobei eine hohle Annullation (360) unter der Federnut (36) vorgesehen ist, sodass eine Kompressionsfeder (52) in der Federnut (36) montiert sein kann und die Gewindebuchsen (24) durch den Federschlitz passieren können;
eine Zugstange (4), welche in besagter Druckplatte (3) montiert ist, und wobei die Zugstange (4) die Druckplatte (3) antreiben kann, um sich nach oben oder nach unten zu bewegen; und
eine Lagerplatte (5), welche über der Druckplatte (3) montiert ist, wobei besagte Lagerplatte (5) mit einer Mehrzahl von Bolzenlöchern (50) vorgesehen ist, welche mit den Gewindebuchsen (24) der Kupplungsvorrichtung (2) korrespondieren, sodass die Bolzen (51) durch die Bolzenlöcher (50) passieren können und die Gewindebuchsen (24) der Kupplungsvorrichtung (2) verriegeln können; wobei besagte Kompressionsfeder (52) außerhalb der Gewindebuchsen (24) und zwischen der Lagerplatte (5) und der Annullation der Druckplatte (3) montiert ist, um der Druckplatte (3) eine zurückfedernde Kraft bereitzustellen;
**gekennzeichnet dadurch, dass**
zumindest eine zweite Torsionsnut (31) über besagter Druckplatte (3) angeordnet ist; wobei besagte Lagerplatte (5) mit zumindest einem zweiten Torsionsflansch (53) vorgesehen ist, wobei die Form des zweiten Torsionsflansch (53) mit der Form der zweiten Torsionsnut (31) der Druckplatte (3) korrespondiert, sodass eine Torsionsspannung zwischen der Druckplatte (3) und der Lagerplatte (5) erzeugt werden kann, um den Druck zwischen der Druckplatte (3) und der Lagerplatte (5) zu puffern;
dadurch wird, wenn das Fahrzeug verschoben werden soll, der Fahrer oder die elektronische Steuereinheit den Übertragungshebel (41) aktivieren, um sich entgegen dem Uhrzeigersinn zu drehen, dann treibt besagte Zugstange (4) besagte Druckplatte (3) an, um eine aufwärts-ziehende Kraft zu erzeugen; zu diesem Zeitpunkt wird die zweite Torsionsnut (31) der Druckplatte (3) ein korrespondierendes Rotationsdrehmoment mit dem zweiten Torsionsflansch (53) der Lagerplatte (5) erzeugen, um die aufwärts-ziehende Kraft der Druckplatte (3) zu puffern, sodass die Geschwindigkeit der Druckplatte (3), um die aktive Kupplungsplatten (14) freizugeben, verlangsamt werden kann, und das Getriebe stabil geschaltet werden kann;
wobei wenn der Fahrer oder die elektronische Steuereinheit das Verschieben abschließt, wird sich, im Moment des Schließens der Kupplung, der Übertragungshebel (41) im Uhrzeigersinn drehen und eine zurückfedernde Kraft, welche mittels der Kompressionsfeder (52) erzeugt wird, wird die Druckplatte (3) dazu veranlassen, einen Abwärts-Druck zu erzeugen; wobei die erste Torsionsnut (30) der Druckplatte (3) zu diesem Zeitpunkt ein korrespondierendes Rotationsdrehmoment mit dem ersten Torsionsflansch (23) der Kupplungsvorrichtung (2) erzeugen wird, um den Abwärts-Druck der Druckplatte (3) zu puffern; sodass die Gefahr der, durch sofortiges Blockieren der aktiven Kupplungsplatte (14) und der passiven Kupplungsplatte (21), Rutsch- oder Fall-Ursachen vermieden werden kann.

2. Die Leistungsdrehmoment-Kupplung mit Verhinderung-Reifen-Blockier-Funktion nach Anspruch 1, wobei nur eine Hilf-Stahl-Platte (34) an der äußeren Seitenwand der Druckplatte (3) montiert ist, die Hilf-Stahl-Platte (34) in dem Platz zwischen zwei aktiven Kupplungsplatten (14) eingesetzt ist, sodass die Hilf-Stahl-Platten (34) zwei Reibflächen mit besagter aktiven Kupplungsplatte (14) erzeugen können, um die Torsionsspannung-Ausgabe zwischen der Druckplatte (3) und dem Gehäuse (1) zu erhöhen.

3. Die Leistungsdrehmoment-Kupplung mit Verhinderung-Reifen-Blockier-Funktion nach Anspruch 1, wobei das Zentrum von besagter Kupplungsvorrichtung (2) mit einem Durchgangsloch (22) vorgesehen ist, und eine Keilnut (220) innerhalb des Durchgangsloch (22) gebildet ist, wobei die Keilnut (220) mit einem Ende von besagter Ausgabewelle (6) gekoppelt ist und das andere Ende der Ausgabewelle (6) mit dem Getriebe verbunden ist.

4. Die Leistungsdrehmoment-Kupplung mit Verhinderung-Reifen-Blockier-Funktion nach Anspruch 1, wobei besagter erster Torsionsflansch (23) mit einer Schrägfläche (230) und einer senkrechten Fläche (231) vorgesehen ist, und ein spitzer Winkel (232) am oberen Ende des ersten Torsionsflanschs (23) gebildet ist; wobei besagte zweite Torsionsnut (31) symmetrisch über besagter erster Torsionsnut (30) angeordnet ist.

5. Die Leistungsdrehmoment-Kupplung mit Verhinderung-Reifen-Blockier-Funktion nach Anspruch 4, wobei besagte Kupplungsvorrichtung (2) mit drei ersten Torsionsflanschen (23) vorgesehen ist, wobei die ersten Torsionsflansche (23) in einem Abstand von 120° voneinander angeordnet sind, um die Torsionsstabilität zwischen der Kupplungsvorrichtung (2) und der Druckplatte (3) zu verbessern.

6. Die Leistungsdrehmoment-Kupplung mit Verhinderung-Reifen-Blockier-Funktion nach Anspruch 1, wobei besagte erste Torsionsnut (30) mit einer Schrägfläche (300) und einer senkrechten Fläche (301) vorgesehen ist, wobei eine Aussparung am Ende der ersten (30) und zweiten Torsionsnut (31) gebildet ist; wobei besagte zweite Torsionsnut (31) mit einer Schrägfläche (310) und einer senkrechten Fläche (311) vorgesehen ist, wobei eine Aussparung (302, 312) am Ende der ersten (30) und zweiten Torsionsnut (31) gebildet ist.

7. Die Leistungsdrehmoment-Kupplung mit Verhinderung-Reifen-Blockier-Funktion nach Anspruch 1, wobei zumindest drei Reibflächen zwischen der ringförmigen Fläche (33) und der aktiven Kupplungsplatte (14) und dem Hilf-Stahl-Blech (34) und der aktiven Kupplungsplatten (14) erzeugt werden, wobei die Reibflächen kontinuierlich Reibungswiderstand bereitstellen, sodass die aktiven Kupplungsplatten (14) des Gehäuses (1) kontinuierlich eine stabile Drehmomentausgabe an die Kupplungsvorrichtung (2) erzeugen können.

8. Die Leistungsdrehmoment-Kupplung mit Verhinderung-Reifen-Blockier-Funktion nach Anspruch 1, wobei jede Kompressionsfeder (52) in jeder der Federnuten (36) von besagter Druckplatte (3) montiert ist, wobei die Kompressionsfeder (52) gegen die hohle Annullation (360) der Federnuten (36) ist, und die Kompressionsfeder (52) der Druckplatte (3) hilft, rasch zu ihrer Ursprungsposition zurückzukehren.

9. Die Leistungsdrehmoment-Kupplung mit Verhinderung-Reifen-Blockier-Funktion nach Anspruch 1, wobei besagte Zugstange (4) an besagte Druckplatte (3) geschwenkt wird, das Zentrum von besagter Druckplatte (3) mit einem Durchgangsloch (32) vorgesehen ist, eine Lagernut (320) im Durchgangsloch (32) gebildet ist, ein Kugellager (321) in der Lagernut (320) montiert ist, und besagte Zugstange (4) im Kugellager (321) montiert ist; dadurch kann die Zugstange (4) die Druckplatte (3) antreiben, um sich nach oben zu bewegen, um das Getriebe zu veranlassen, stabil zu schalten, und der Übertragungshebel (41) kann die Zugstange (4) antreiben, um sich abwärts zu bewegen, um zu verhindern, dass der Fahrzeugreifen in einem Moment stillsteht.

10. Die Leistungsdrehmoment-Kupplung mit Verhinderung-Reifen-Blockier-Funktion nach Anspruch 1, wobei besagter zweiter Torsionsflansch (53) mit einer Schrägfläche (530) und einer senkrechten Fläche (531) vorgesehen ist, und ein spitzer Winkel (532) am unteren Ende des zweiten Torsionsflanschs (53) gebildet ist.

## Revendications

1. Embrayage de couple de puissance avec une fonction de blocage de pneu évité, comprenant :
un carter (1), est pourvu d'un engrenage (10), le carter (1) et l'engrenage (10) sont rivés l'un à l'autre par un élément de connexion (11) ; une pluralité de plateaux d'embrayage actifs (14) disposés en parallèle sont montés sur la paroi latérale intérieure du carter (1), de sorte que les plateaux d'embrayage actifs (14) peuvent être fixés à l'intérieur du carter (1) et tourner de manière synchrone avec le carter (1) ;
un ensemble d'embrayage (2), est monté à l'intérieur dudit carter (1), une pluralité de plateaux d'embrayage passifs (21) disposés en parallèle sont montés sur la paroi latérale extérieure de l'ensemble d'embrayage (2), de sorte que les plateaux d'embrayage passifs (21) peuvent être fixés à l'extérieur de l'ensemble d'embrayage (2) et tourner de manière synchrone avec l'ensemble d'embrayage (2) ; chacun desdits plateaux d'embrayage passifs (21) et chacun desdits plateaux d'embrayage actifs (14) sont empilés alternativement les uns avec les autres ; ledit ensemble d'embrayage (2) est couplé à une extrémité d'un arbre de sortie (6) ; au moins une première bride de torsion (23) est disposée au-dessus dudit ensemble d'embrayage (2) ; ledit ensemble d'embrayage (2) est pourvu d'une pluralité de colonnes d'écrou (24) ;
un plateau de pression (3), est monté au-dessus de l'ensemble d'embrayage (2), ledit plateau de pression (3) est muni d'au moins une première rainure de torsion (30), la forme de la première rainure de torsion (30) correspond à la forme de la première bride de torsion (23), de sorte qu'une contrainte de couple entre le plateau de pression (3) et l'ensemble d'embrayage (2) peut être générée pour amortir la pression entre le plateau de pression (3) et l'ensemble d'embrayage (2) ; une surface annulaire (33) est formée sous la circonférence extérieure dudit plateau de pression (3), la surface annulaire (33) est en contact avec le plateau d'embrayage actif le plus haut (14) du carter (1), et une surface de friction est formée entre la surface annulaire (33) et le plateau d'embrayage actif le plus haut (14) ; au moins un plateau d'acier auxiliaire (34) est monté sur la paroi latérale extérieure du plateau de pression (3), chacun du plaque d'acier auxiliaire (34) est inséré dans l'emplacement entre deux plateaux d'embrayage actifs (14), de sorte que chacune des tôles d'acier auxiliaires (34) peut générer deux surfaces de friction avec ledit plateau d'embrayage actif (14) pour augmenter la sortie de contrainte de couple entre le plateau de pression (3) et le carter (1) ; ledit plateau de pression (3) est muni d'une pluralité de rainures de ressort (36) qui correspondent auxdites colonnes d'écrou (24) de l'ensemble d'embrayage (2), une annulation creuse (360) est prévue sous la rainure de ressort (36), de sorte qu'un ressort de compression (52) peut être monté dans la rainure de ressort (36) et les colonnes d'écrou (24) peuvent passer à travers la fente de ressort ;
une barre d'accouplement (4), est montée dans ledit plateau de pression (3), et la barre d'accouplement (4) peut entraîner le plateau de pression (3) à se déplacer vers le haut et vers le bas ; et
un plateau de support (5), est monté au-dessus du plateau de pression (3), ledit plateau de support (5) est pourvu d'une pluralité de trous de boulon (50) qui correspondent aux colonnes d'écrou (24) de l'ensemble d'embrayage (2), de sorte que les boulons (51) peuvent passer à travers les trous de boulon (50) et verrouiller les colonnes d'écrou (24) de l'ensemble d'embrayage (2) ; ledit ressort de compression (52) est monté à l'extérieur des colonnes d'écrou (24) et entre la plateau de support (5) et l'anneau du plateau de pression (3) pour fournir une force de rebondissement au plateau de pression (3) ;
**caractérisé en ce que**
au moins une seconde rainure de torsion (31) est disposée au-dessus dudit plateau de pression (3) ;
ledit plateau de support (5) est pourvu d'au moins une seconde bride de torsion (53), la forme de la seconde bride de torsion (53) correspond à la forme de la seconde rainure de torsion (31) du plateau de pression (3), de sorte qu'une contrainte de couple entre le plateau de pression (3) et le plateau de support (5) peut être générée pour amortir la pression entre le plateau de pression (3) et le plateau de support (5) ;
de cette façon, lorsque le véhicule doit être changé de vitesse, le conducteur ou l'unité de commande électronique active le levier de transmission (41) pour qu'il tourne dans le sens inverse des aiguilles d'une montre, puis ladite barre d'accouplement (4) entraîne ledit plateau de pression (3) pour générer une force de traction vers le haut ; à ce moment, la seconde rainure de torsion (31) du plateau de pression (3) génère un couple de rotation correspondant avec la seconde bride de torsion (53) du plateau de support (5) pour amortir la force de traction vers le haut du plateau de pression (3), de sorte que la vitesse du plateau de pression (3) pour libérer les plateaux d'embrayage actifs (14) peut être ralentie, et la transmission peut être commutée de manière stable ;
lorsque le conducteur ou l'unité de commande électronique achève le changement de vitesse, au moment de la fermeture de l'embrayage, le levier de transmission (41) tourne dans le sens des aiguilles d'une montre, et une force de rebond générée par le ressort de compression (52) amène le plateau de pression (3) à générer une pression vers le bas ; à ce moment, la première rainure de torsion (30) du plateau de pression (3) génère un couple de rotation correspondant avec la première bride de torsion (23) de l'ensemble d'embrayage (2) pour amortir la pression vers le bas du plateau de pression (3) ; de sorte que le risque de glissement ou de chute causé par les plateaux d'embrayage actifs (14) et les plateaux d'embrayage passifs (21) instantanément en blocage peut être évité.

2. Embrayage de couple de puissance avec une fonction de blocage de pneu évité selon la revendication 1, dans lequel seulement un plateau d'acier auxiliaire (34) est monté sur la paroi latérale extérieure du plateau de pression (3), le plateau d'acier auxiliaire (34) est inséré dans l'emplacement entre deux plateaux d'embrayage actifs (14), de sorte que les plateaux d'acier auxiliaires (34) peuvent générer deux surfaces de friction avec ledit plateau d'embrayage actif (14) pour augmenter la sortie de contrainte de couple entre le plateau de pression (3) et le carter (1).

3. Embrayage de couple de puissance avec une fonction de blocage de pneu évité selon la revendication 1, dans lequel le centre dudit ensemble d'embrayage (2) est muni d'un trou traversant (22), et une rainure de clavette (220) est formée à l'intérieur du trou traversant (22), la rainure de clavette (220) est couplée à une extrémité dudit arbre de sortie (6) et l'autre extrémité de l'arbre de sortie (6) est reliée à la transmission.

4. Embrayage de couple de puissance avec une fonction de blocage de pneu évité selon la revendication 1, dans lequel ladite première bride de torsion (23) est pourvue d'une surface oblique (230) et d'une surface verticale (231), et un angle aigu (232) est formé à l'extrémité supérieure de la première bride de torsion (23) ; ladite seconde rainure de torsion (31) est disposée symétriquement au-dessus de ladite première rainure de torsion (30).

5. Embrayage de couple de puissance avec une fonction de blocage de pneu évité selon la revendication 4, dans lequel ledit ensemble d'embrayage (2) est pourvu de trois premières brides de torsion (23), les premières brides de torsion (23) sont disposées à un intervalle de 120 degrés les unes des autres afin d'améliorer la stabilité de torsion l'une de l'autre pour améliorer la stabilité de torsion entre l'ensemble d'embrayage (2) et le plateau de pression (3).

6. Embrayage de couple de puissance avec une fonction de blocage de pneu évité selon la revendication 1, dans lequel ladite première rainure de torsion (30) est pourvue d'une surface oblique (300) et d'une surface verticale (301), un évidement est formé à l'extrémité de la première (30) et de la seconde (31) rainure de torsion ; ladite seconde rainure de torsion (31) est pourvue d'une surface oblique (310) et d'une surface verticale (311), un évidement (302, 312) est formé à l'extrémité de la première (30) et de la seconde rainure de torsion (31).

7. Embrayage de couple de puissance avec une fonction de blocage de pneu évité selon la revendication 1, dans lequel au moins trois surfaces de friction sont générées entre la surface annulaire (33) et le plateau d'embrayage actif (14) et la tôle d'acier auxiliaire (34) et les plateaux d'embrayage actifs (14), les surfaces de friction fourniront continuellement une résistance de friction de sorte que les plateaux d'embrayage actifs (14) du carter (1) peuvent générer en continu un couple de sortie stable à l'ensemble d'embrayage (2).

8. Embrayage de couple de puissance avec une fonction de blocage de pneu évité selon la revendication 1, dans lequel chaque ressort de compression (52) est monté dans chaque rainure de ressort (36) dudit plateau de pression (3), le ressort de compression (52) est contre l'annulation creuse (360) des rainures de ressort (36), et le ressort de compression (52) aide le plateau de pression (3) à revenir rapidement à sa position d'origine.

9. Embrayage de couple de puissance avec une fonction de blocage de pneu évité selon la revendication 1, dans lequel ladite barre d'accouplement (4) pivote sur ledit plateau de pression (3), le centre dudit plateau de pression (3) est muni d'un trou traversant (32), une rainure de roulement (320) est formée dans le trou traversant (32), un roulement à billes (321) est monté dans la rainure de roulement (320), et ladite barre d'accouplement (4) est montée dans le roulement à billes (321) ; de cette façon, la barre d'accouplement (4) peut entraîner la plateau de pression (3) pour se déplacer vers le haut pour rendre le changement de vitesse stable, et le levier de transmission (41) peut entraîner la barre d'accouplement (4) pour se déplacer vers le bas pour empêcher le pneu du véhicule d'être bloqué à un moment donné.

10. Embrayage de couple de puissance avec une fonction de blocage de pneu évité selon la revendication 1, dans lequel ladite seconde bride de torsion (53) est pourvue d'une surface oblique (530) et d'une surface verticale (531), et un angle aigu (532) est formé à l'extrémité inférieure de la seconde bride de torsion (53).
